# FASCICULE DE BREVET EUROPEEN

(11) **EP 2 017 587 B1**
(45) Date de publication et mention de la délivrance du brevet: **14.09.2016**
(21) Numéro de dépôt: 08356107.6
(22) Date de dépôt: 18.07.2008
(51) Int. Cl.: G01F 23/22, F24H 9/20

(54) **Dispositif de détection permettant de mesurer la quantité d'eau chaude restante dans un ballon de stockage**
Erfassungsvorrichtung, die das Messen der verbleibenden Heißwassermenge in einem Warmwasserspeichertank ermöglicht
Detection device used to measure the amount of hot water remaining in a storage tank

(30) Priorité: 20.07.2007 FR 0705252
(43) Date de publication de la demande: 21.01.2009
(73) Titulaire: Cotherm, 38470 Vinay (FR)
(72) Inventeur: Roques, Bernard, 38850 Bilieu (FR); Riondy, Jean-Marc, 01300 Belley (FR)
(74) Mandataire: Schmitt, John

(56) Documents cités:
- EP-A- 1 281 940
- GB-A- 1 027 253

## Description

La présente invention est relative à un dispositif de détection permettant de mesurer la quantité d'eau chaude restante dans un ballon de stockage et plus particulièrement dans un ballon d'eau chaude sanitaire.

On connaît d'après les brevets d'invention FR 2 828 279 et EP 1 281 940 un dispositif de détection de ce genre comportant un tube capillaire pourvu de moyens d'amplification constitués de serpentins ou de renflements bulbaires contenant un fluide susceptible de se dilater en fonction de la quantité d'eau chaude contenue dans le chauffe-eau, et des moyens de transformation de la variation volumique en un signal visuel indiquant la quantité d'eau chaude présente dans le chauffe-eau.

Les moyens de transformation de la variation volumique en un signal visuel sont constitués d'un réservoir obturé par une membrane qui se déplace sous l'effet des variations volumiques afin de faire pivoter une bielle entraînant dans un déplacement rectiligne une crémaillère sur laquelle s'engrène un pignon solidaire d'une aiguille se positionnant devant une échelle graduée.

On note que les dispositifs de détection existants à ce jour ne permettent d'effectuer qu'une estimation de la quantité d'eau chaude restante dans un chauffe-eau. Ces dispositifs sont principalement basés sur le principe de capteurs placés à intervalles réguliers à l'intérieur de la cuve du chauffe-eau.

On entend par capteurs soit des thermistances pour les dispositifs électroniques, soit des bulbes ou serpentins remplis d'un fluide caloporteur et reliés entre eux par un tube capillaire en ce qui concerne les dispositifs électromécaniques.

Cependant, ces dispositifs de détection ne fournissent qu'une information discrète sur la quantité d'eau chaude restante soit ¼, ½, ¾ de cuve pleine lorsque ledit dispositif comporte quatre capteurs placés à l'intérieur de la cuve du chauffe-eau.

Le dispositif de détection du chauffe eau suivant la présente invention a pour objet de fournir une information continue de la quantité d'eau chaude restante dans la cuve du chauffe-eau. D'autre part, le dispositif de détection suivant la présente invention fonctionne aussi bien placé à l'intérieur qu'à l'extérieur de la cuve du chauffe-eau, plaqué contre la paroi métallique.

Le chauffe eau suivant la présente invention comprend un dispositif de détection pour mesurer la quantité d'eau chaude restante à l'intérieur d'une cuve du chauffe-eau qui comporte un tube capillaire, contenant un fluide caloporteur qui est placé à l'extérieur de la cuve du chauffe-eau, plaqué sous la couche de l'isolant thermique et collé contre et sur toute la hauteur de la face externe verticale de ladite cuve, ledit tube capillaire étant raccordé à un dispositif indicateur comportant un dispositif d'amplification disposé à l'extérieur de ladite cuve et permettant de transmettre sous l'effet de la dilatation du fluide contenu dans le tube capillaire soit un mouvement à un organe, soit une variation de résistance à un système électronique de manière à indiquer en continu la quantité d'eau chaude disponible restante dans la cuve du chauffe-eau.

Le chauffe eau suivant la présente invention comporte un tube capillaire qui est prévu pour faire sensiblement la hauteur de la cuve du chauffe-eau.

Le chauffe eau suivant la présente invention comporte un dispositif indicateur pourvu d'un dispositif d'amplification permettant de transmettre un mouvement à un organe se déplaçant le long d'une échelle graduée indiquant la quantité d'eau chaude disponible restant dans la cuve.

Le chauffe eau suivant la présente invention comporte un dispositif d'amplification constitué d'un tube de bourdon permettant de transmettre le mouvement à l'organe formé d'une aiguille solidaire d'un axe de manière à se déplacer le long de l'échelle graduée.

Le chauffe eau suivant la présente invention comporte un axe qui est connecté avec l'extrémité libre du tube de bourdon par l'intermédiaire d'une encoche permettant, lors de la déformation dudit tube sous l'effet de la dilatation du fluide contenu dans le tube capillaire, d'entraîner en rotation l'aiguille.

Le chauffe eau suivant la présente invention comporte un dispositif indicateur pourvu d'un dispositif d'amplification qui est constitué d'une membrane raccordée hermétiquement au tube capillaire et d'un capteur électronique relié par une connexion à un système électronique.

Le chauffe eau suivant la présente invention comporte un capteur électronique qui est plaqué sur la surface de la membrane dont la déformation est proportionnelle à la dilatation du fluide caloporteur contenu à l'intérieur du tube capillaire de manière à transcrire en une variation de résistance exploitable par une carte électronique de mesure.

Le chauffe eau suivant la présente invention comporte une carte électronique de mesure qui est prévue à l'intérieur d'un boîtier permettant l'affichage sous forme numérique ou sous forme visuelle tel qu'un bar graphe lumineux de la quantité d'eau chaude disponible restant dans la cuve.

Le chauffe eau suivant la présente invention comporte un dispositif d'amplification qui est relié par une connexion à un système électronique permettant le pilotage d'au moins une résistance de relance d'un chauffe-eau électro ou hydro solaire.

Le chauffe eau suivant la présente invention comporte un dispositif d'amplification qui est relié par une connexion à un système électronique permettant le pilotage de la circulation d'un fluide caloporteur issu d'une chaudière dans un serpentin se trouvant à l'intérieur d'un chauffe-eau hydro solaire.

Le dispositif de détection suivant la présente invention comporte un dispositif d'amplification qui est relié par une connexion à un système électronique permettant le pilotage de la circulation d'un fluide caloporteur issu de capteurs solaires dans un serpentin se trouvant à l'intérieur d'un chauffe-eau électro ou hydro solaire.

Les dessins annexés, donnés à titre d'exemple, permettront de mieux comprendre l'invention, les caractéristiques qu'elle présente et les avantages qu'elle est susceptible de procurer :
Figures 1 et 2 sont des vues illustrant un dispositif de détection électromécanique pour mesurer la quantité d'eau chaude restante dans un ballon de stockage suivant la présente invention.
Figures 3 et 4 sont des vues représentant un dispositif de détection électronique pour mesurer la quantité d'eau chaude restante dans un ballon de stockage suivant la présente invention.
Figure 5 est une vue montrant un dispositif de détection électronique pour mesurer la quantité d'eau chaude restante dans un ballon de stockage d'un chauffe-eau électro-solaire ou hydrosolaire suivant la présente invention.

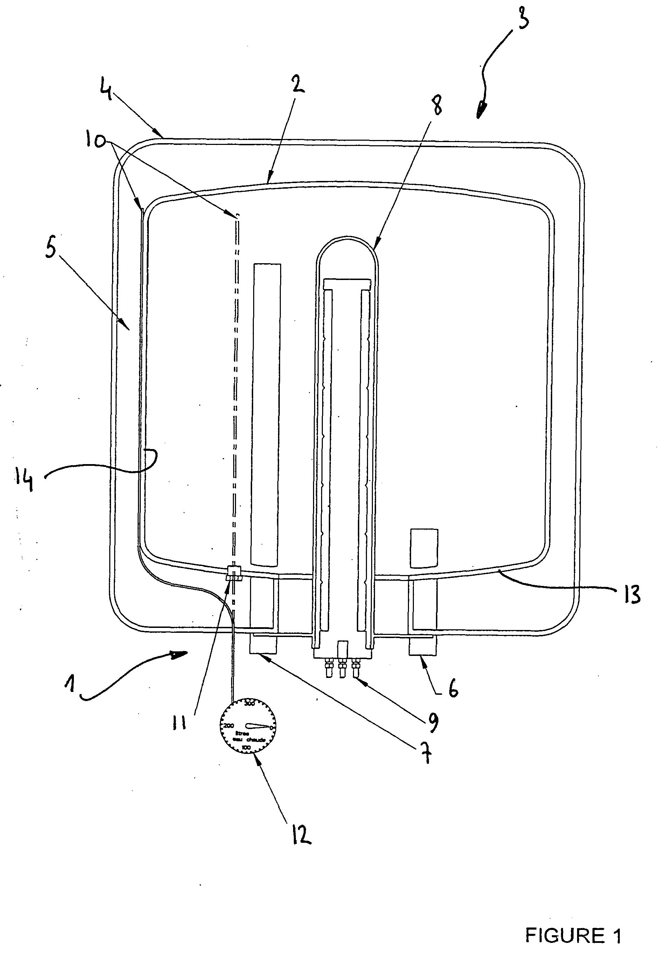

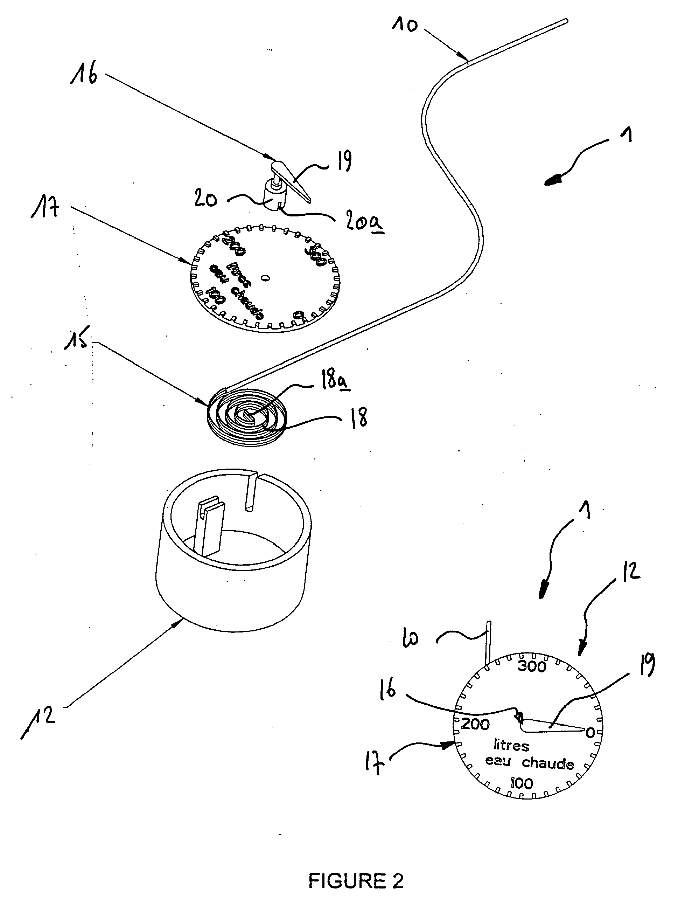

On a montré en figures 1 et 2 un dispositif de détection électromécanique 1 pour mesurer la quantité d'eau chaude restante à l'intérieur d'un ballon de stockage et plus particulièrement à l'intérieur d'une cuve 2 d'un chauffe-eau 3.

Le chauffe-eau 3 est constitué d'une enveloppe extérieure 4 à l'intérieur de laquelle est disposée la cuve 2. Le chauffe-eau 3 comporte entre l'enveloppe extérieure 4 et la cuve 2 un isolant thermique 5.

Le chauffe-eau 3 comprend une entrée d'eau froide 6 et une sortie d'eau chaude 7 permettant le remplissage et l'extraction de l'eau contenue à l'intérieur de la cuve 2.

Le tube capillaire 10 est prévu d'une longueur identique à la hauteur de la cuve 2, qu'il soit placé à l'intérieur ou à l'extérieur de la dite cuve.

Lorsque le tube capillaire 10 est placé à l'extérieur de la cuve 2, ce dernier est plaqué sous la couche de l'isolant thermique 5 et collé contre et sur toute la hauteur de la face externe verticale 14 de ladite cuve.

On note que, sous l'action de la chaleur contenue dans l'eau, le fluide caloporteur retenu à l'intérieur du tube capillaire se dilate.

Cette dilatation du fluide caloporteur est transmise au dispositif indicateur 12 et plus particulièrement à un dispositif d'amplification 15 disposé à l'extérieur de la cuve 2 et permettant de transmettre un mouvement à un organe 16 se déplaçant le long d'une échelle graduée 17 indiquant la quantité d'eau chaude disponible restant dans ladite cuve 2 du chauffe-eau 3.

Dans un premier exemple de réalisation, le dispositif d'amplification 15 est constitué d'un tube de bourdon 18 permettant de transmettre le mouvement à l'organe 16 formé d'une aiguille 19 solidaire d'un axe 20 de manière à se déplacer le long de l'échelle graduée 17.

L'axe 20 est connecté avec l'extrémité libre 18a du tube de bourdon 18 par l'intermédiaire d'une encoche 20a permettant, lors de la déformation dudit tube sous l'effet de la dilatation du fluide contenu dans le tube capillaire, d'entraîner en rotation l'aiguille 19.

A tout moment, l'eau étant stratifiée par température dans la cuve 2, la dilatation du fluide caloporteur et donc le mouvement le long de l'échelle graduée 17 sont proportionnels à la quantité de chaleur contenue dans l'eau. La mesure fournie est donc continue et indépendante du positionnement du tube capillaire 10 par rapport à la cuve 2.

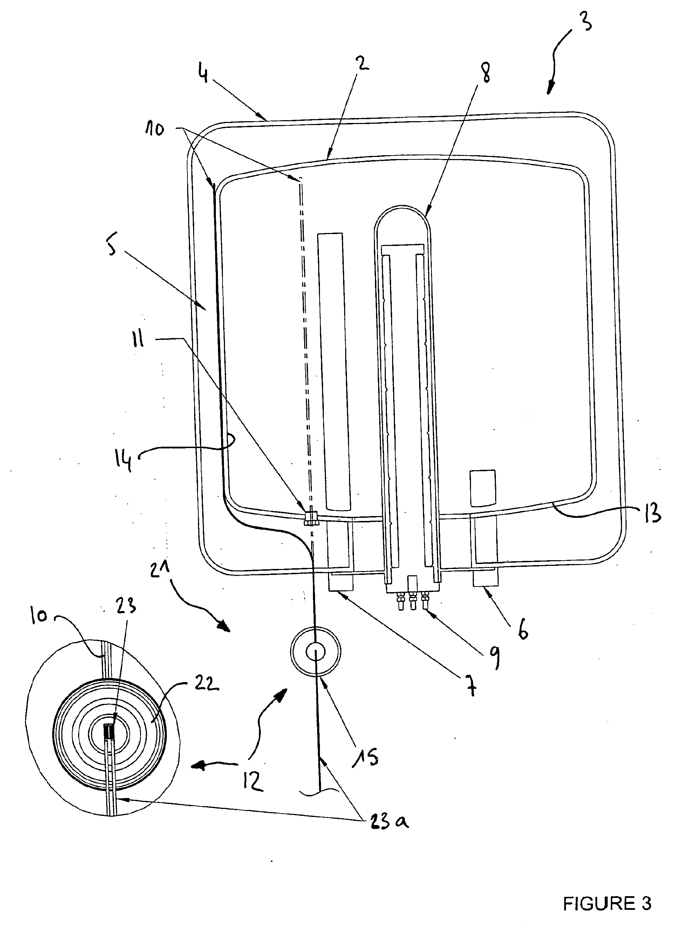

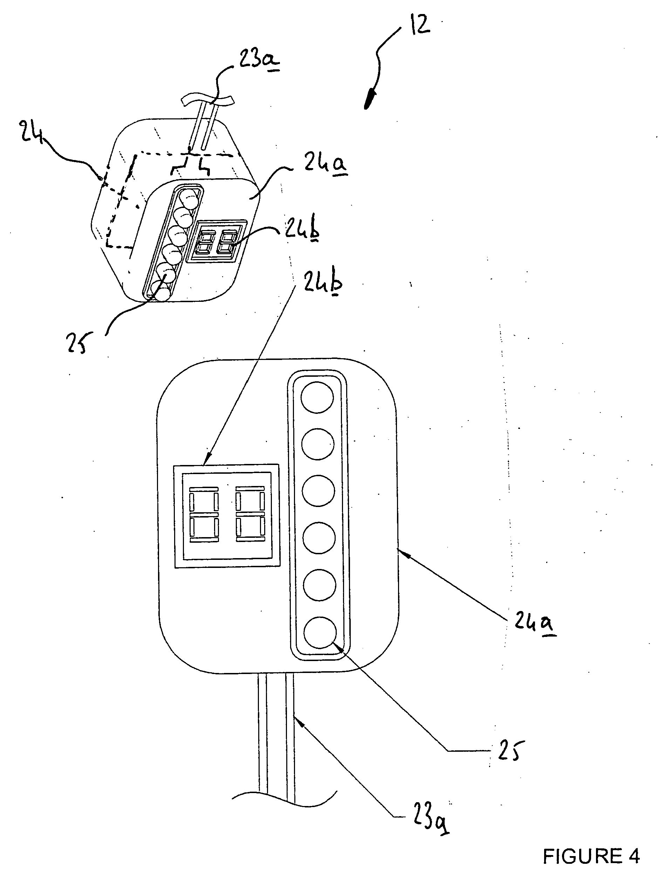

On a représenté en figures 3 et 4 un dispositif de détection électronique 21 pour mesurer la quantité d'eau chaude restante à l'intérieur d'un ballon de stockage et plus particulièrement à l'intérieur de la cuve 2 du chauffe-eau 3 tel que décrit précédemment.

Le dispositif de détection électronique 21 comprend un tube capillaire 10 qui est raccordé à un dispositif indicateur 12 comportant un dispositif d'amplification 15 disposé à l'extérieur de la cuve 2 et constitué d'une membrane 22 solidaire d'un capteur électronique 23 relié par une connexion 23a à une carte électronique de mesure 24.

Ainsi, le tube capillaire 10 est raccordé hermétiquement à la membrane 22 qui se déforme sous l'effet de la dilatation du fluide caloporteur permettant à cette dernière de venir se plaquer contre le capteur électronique 23.

La déformation de la membrane 22 est proportionnelle à la dilatation du fluide caloporteur contenu à l'intérieur du tube capillaire 10. Cette déformation de la membrane 22 est transcrite au moyen du capteur électronique 23 en une variation de résistance exploitable par la carte électronique de mesure 24 prévue par exemple à l'intérieur d'un boîtier 24a.

Ainsi, la quantité d'eau chaude restante à l'intérieur de la cuve 2 peut donc être affichée par l'intermédiaire de la carte électronique de mesure 24 sous forme numérique 24b ou sous forme visuelle, tel qu'un bar graphe lumineux 25.

Egalement, les données fournies par le dispositif de détection électronique 21 peuvent être directement exploitées par un système de régulation 26 plus complexe.

A ce titre, le dispositif de détection électronique 21 peut être utilisé pour effectuer des relances de chauffe dites « intelligentes » pour entreprendre des économies de consommation électrique en optimisant le moment de relance de chauffe.

A cet effet, dans le cas d'un chauffe-eau 3 électrique classique, on peut décaler le moment de la relance pour éviter de stocker inutilement, pendant un temps trop long, de l'eau chaude limitant ainsi les pertes thermiques au travers de l'isolation.

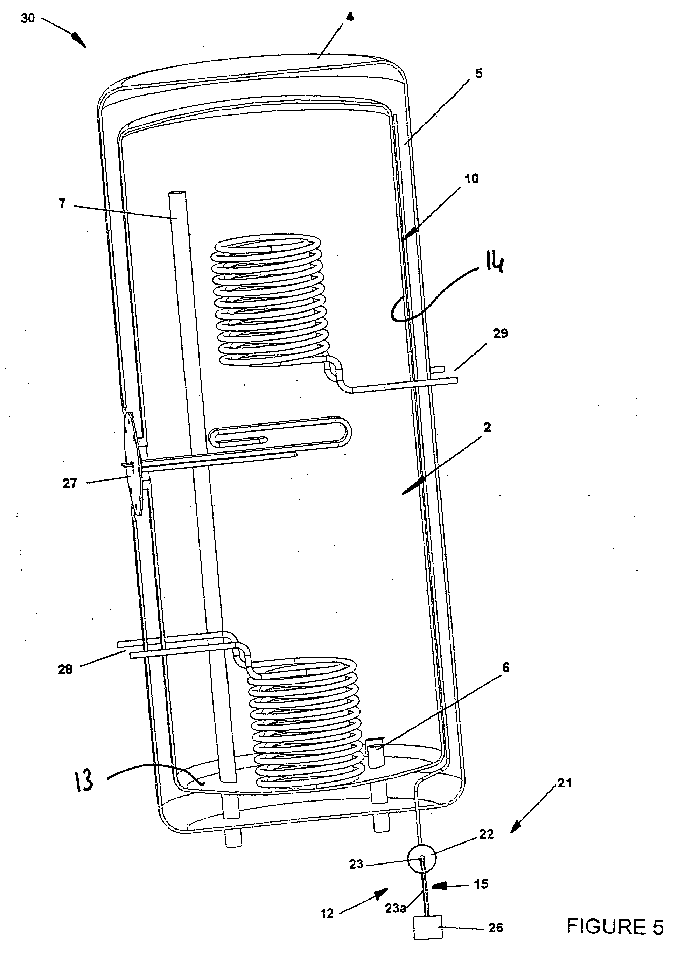

On a montré en figure 5 un dispositif de détection électronique 21 pour mesurer la quantité d'eau chaude restante à l'intérieur d'un ballon de stockage et plus particulièrement à l'intérieur de la cuve 2 d'un chauffe-eau électro ou hydro solaire 30.

Le chauffe-eau 30 est constitué d'une enveloppe extérieure 4 à l'intérieur de laquelle est disposée la cuve 2. Le chauffe eau 3 comporte entre l'enveloppe extérieure 4 et la cuve 2 un isolant thermique 5.

Le chauffe-eau 30 comprend une entrée d'eau froide 6 et une sortie d'eau chaude 7 permettant le remplissage et l'extraction de l'eau contenue à l'intérieur de la cuve 2.

Le chauffe eau 30 comporte un serpentin 28 permettant la circulation d'un fluide chauffé par des capteurs solaires.

Dans ce type de chauffe-eau électro ou hydro solaire 30 la relance de chauffe est assurée par une résistance électrique 27, ou par la circulation dans un serpentin 29 d'un fluide chauffé par une chaudière.

Dans ce type de chauffe-eau, on peut décaler le moment de relance, par exemple, en fin de journée.

Avant d'engager cette relance de chauffe, il est nécessaire au préalable de vérifier la quantité d'eau chaude disponible dans la cuve 2 avec le profil de consommation de l'utilisateur, profitant ainsi en plein de l'apport solaire.

Sachant que le dispositif de détection électronique 21 suivant la présente invention fournit une information exacte et continue sur la quantité d'eau chaude disponible dans la cuve 2, il est donc possible de coupler ce dernier avec un système de relance 26 permettant de déterminer avec précision et en temps réel le moment optimum de la relance de chauffe.

Pour cela, le dispositif de détection électronique 21 comporte un tube capillaire 10 qui est placé à l'extérieur de la cuve 2, tandis que le capteur électronique 23 plaqué contre la membrane 22 est raccordé par une connexion 23a au système électronique 26.

En fonction du chauffe eau, le système électronique 26 permet le pilotage de la circulation d'un fluide caloporteur issu d'une chaudière dans un serpentin 29 se trouvant à l'intérieur de la cuve 2 d'un chauffe-eau hydro solaire 30 ou le pilotage de la circulation d'un fluide caloporteur issu de capteurs solaires dans un serpentin 28 se trouvant à l'intérieur de la cuve 2 d'un chauffe-eau électro ou hydro solaire 30.

Ce système électronique 26 peut également assurer d'autres fonctions comme la circulation du fluide dans le serpentin relié au capteur solaire, la programmation ou l'apprentissage du profil de consommation de l'utilisateur, le comptage d'énergie électrique et solaire.

Il doit d'ailleurs être entendu que la description qui précède n'a été donnée qu'a titre d'exemple et qu'elle ne limite nullement le domaine de l'invention dont on ne sortirait pas en remplaçant les détails d'exécution décrits par tous autres équivalents.

## Revendications

1. Chauffe eau comprenant un dispositif de détection (1, 21) pour mesurer la quantité d'eau chaude restante à l'intérieur d'une cuve (2) du chauffe eau (3, 30), **caractérisé en ce qu'**il comporte un tube capillaire (10) contenant un fluide caloporteur qui est placé à l'extérieur de la cuve (2) du chauffe-eau (3, 30), plaqué sous la couche de l'isolant thermique (5) et collé contre et sur toute la hauteur de la face externe verticale (14) de ladite cuve, ledit tube capillaire (10) étant raccordé à un dispositif indicateur (12) comportant un dispositif d'amplification (15) disposé à l'extérieur de ladite cuve (2) et permettant de transmettre sous l'effet de la dilatation du fluide contenu dans le tube capillaire (10) soit un mouvement à un organe (16), soit une variation de résistance à un système électronique (24, 26) de manière à indiquer en continu la quantité d'eau chaude disponible restante dans la cuve (2) du chauffe-eau (3, 30).

2. Chauffe eau suivant la revendication 1, **caractérisé en ce que** le tube capillaire (10) du dispositif de détection (1, 21) est prévu pour faire sensiblement la hauteur de la cuve (2) du chauffe-eau (3, 30).

3. Chauffe eau suivant la revendication 1, **caractérisé en ce que** le dispositif indicateur (12) du dispositif de détection (1) comporte un dispositif d'amplification (15) permettant de transmettre un mouvement à un organe (16) se déplaçant le long d'une échelle graduée (17) indiquant la quantité d'eau chaude disponible restant dans la cuve (2).

4. Chauffe eau suivant la revendication 3, **caractérisé en ce que** le dispositif d'amplification (15) est constitué d'un tube de bourdon (18) permettant de transmettre le mouvement à l'organe (16) formé d'une aiguille (19) solidaire d'un axe (20) de manière à se déplacer le long de l'échelle graduée (17).

5. Chauffe eau suivant la revendication 4, **caractérisé en ce que** l'axe (20) est connecté avec l'extrémité libre (18a) du tube de bourdon (18) par l'intermédiaire d'une encoche (20a) permettant, lors de la déformation du dit tube sous l'effet de la dilatation du fluide contenu dans le tube capillaire (10), d'entraîner en rotation l'aiguille (19).

6. Chauffe eau suivant la revendication 1 **caractérisé en ce que** le dispositif indicateur (12) du dispositif de détection (21) comporte un dispositif d'amplification (15) qui est constitué d'une membrane (22) raccordée hermétiquement au tube capillaire (10) et d'un capteur électronique (23) relié par une connexion (23a) à un système électronique (24, 26).

7. Chauffe eau suivant les revendications 6, **caractérisé en ce que** le capteur électronique (23) est plaqué sur la surface de la membrane (22) dont la déformation est proportionnelle à la dilatation du fluide caloporteur contenu à l'intérieur du tube capillaire (10) de manière à transcrire en une variation de résistance exploitable par une carte électronique de mesure (24).

8. Chauffe eau suivant la revendication 7, **caractérisé en ce que** la carte électronique de mesure (24) est prévue à l'intérieur d'un boîtier (24a) permettant l'affichage sous forme numérique (24b) ou sous forme visuelle tel qu'un bar graphe lumineux (25) de la quantité d'eau chaude disponible restant dans la cuve (2).

9. Chauffe eau suivant la revendication 6, **caractérisé en ce que** le dispositif d'amplification (15) est relié par une connexion (23a) à un système électronique (26) permettant le pilotage d'au moins une résistance de relance (27) d'un chauffe-eau électro ou hydro solaire (30).

10. Chauffe eau suivant la revendication 6, **caractérisé en ce que** le dispositif d'amplification (15) est relié par une connexion (23a) à un système électronique (26) permettant le pilotage de la circulation d'un fluide caloporteur issu d'une chaudière dans un serpentin (29) se trouvant à l'intérieur d'un chauffe-eau hydro solaire (30).

11. Chauffe eau suivant la revendication 6, **caractérisé en ce que** le dispositif d'amplification (15) est relié par une connexion (23a) à un système électronique (26) permettant le pilotage de la circulation d'un fluide caloporteur issu de capteurs solaires dans un serpentin (28) se trouvant à l'intérieur d'un chauffe-eau électro ou hydro solaire (30).

## Patentansprüche

1. Durchlauferhitzer, umfassend eine Erfassungsvorrichtung (1, 21) zum Messen der im Inneren eines Behälters (2) des Durchlauferhitzers (3, 30) verbleibenden Heißwassermenge, **dadurch gekennzeichnet, dass** er ein Kapillarrohr (10) umfasst, das einen Wärmeträger enthält, der außerhalb des Behälters (2) des Durchlauferhitzers (3, 30) platziert, unter der Schicht des Isoliermaterials (5) angelegt und gegen und auf die gesamte Höhe der vertikalen Außenfläche (14) des Behälters geklebt ist, wobei das Kapillarrohr (10) mit einer Anzeigevorrichtung (12) verbunden ist, die eine Verstärkungsvorrichtung (15) umfasst, die an der Außenseite des Behälters (2) angeordnet ist und unter der Wirkung der Ausdehnung des Fluids, das in dem Kapillarrohr (10) enthalten ist, entweder eine Bewegung an ein Organ (16) oder eine Widerstandsänderung an ein elektronisches System (24, 26) zu übertragen, um kontinuierlich die verfügbare in dem Behälter (2) des Durchlauferhitzers (3, 30) verbleibende Heißwassermenge anzuzeigen.

2. Durchlauferhitzer nach Anspruch 1, **dadurch gekennzeichnet, dass** das Kapillarrohr (10) der Erfassungsvorrichtung (1, 21) vorgesehen ist, um etwa die Höhe des Behälters (2) des Durchlauferhitzers (3, 30) auszumachen.

3. Durchlauferhitzer nach Anspruch 1, **dadurch gekennzeichnet, dass** die Anzeigevorrichtung (12) der Erfassungsvorrichtung (1) eine Verstärkungsvorrichtung (15) umfasst, die die Übertragung einer Bewegung an ein Organ (16) ermöglicht, das sich entlang einer Skala (17) verschiebt, die die verfügbare in dem Behälter verbleibende Heißwassermenge (2) anzeigt.

4. Durchlauferhitzer nach Anspruch 3, **dadurch gekennzeichnet, dass** die Verstärkungsvorrichtung (15) aus einer Bourdon'schen Röhre (18) besteht, die die Übertragung der Bewegung an das Organ (16) ermöglicht, das aus einem Zeiger (19) gebildet ist, der mit einer Achse (20) fest verbunden ist, um sich entlang der Skala (17) zu verschieben.

5. Durchlauferhitzer nach Anspruch 4, **dadurch gekennzeichnet, dass** die Achse (20) mit dem freien Ende (18a) der Bourdon'schen Röhre (18) durch eine Kerbe (20a) verbunden ist, die es während der Verformung der Röhre unter der Wirkung der Ausdehnung des Fluids, das in dem Kapillarrohr (10) enthalten ist, erlaubt, den Zeiger (19) in Drehung anzutreiben.

6. Durchlauferhitzer nach Anspruch 1, **dadurch gekennzeichnet, dass** die Anzeigevorrichtung (12) der Erfassungsvorrichtung (21) eine Verstärkungsvorrichtung (15) umfasst, die aus einer Membran (22), die hermetisch an das Kapillarrohr (10) angeschlossen ist und aus einem elektronischen Sensor (23) besteht, der durch einen Anschluss (23a) mit einem elektronischen System (24, 26) verbunden ist.

7. Durchlauferhitzer nach Anspruch 6, **dadurch gekennzeichnet, dass** der elektronische Sensor (23) an die Oberfläche der Membran (22) gedrückt ist, deren Verformung proportional zu der Ausdehnung des Heizmittels ist, das im Inneren des Kapillarrohrs (10) enthalten ist, um in eine Widerstandsänderung umzuwandeln, die von einer elektronischen Messkarte (24) genutzt werden kann.

8. Durchlauferhitzer nach Anspruch 7, **dadurch gekennzeichnet, dass** die elektronische Messkarte (24) im Inneren eines Gehäuses (24a) vorgesehen ist, das die Anzeige der verfügbaren in dem Behälter (2) verbleibenden Heißwassermenge in numerischer Form (24b) oder in visueller Form, wie etwa mit einer Leuchtbalkengrafik (25), ermöglicht.

9. Durchlauferhitzer nach Anspruch 6, **dadurch gekennzeichnet, dass** die Verstärkungsvorrichtung (15) durch eine Verbindung (23a) mit einem elektronischen System (26) verbunden ist, das die Steuerung mindestens eines Widerstands zur Reaktivierung (27) eines elektro- oder hydro-solaren Durchlauferhitzers (30) ermöglicht.

10. Durchlauferhitzer nach Anspruch 6, **dadurch gekennzeichnet, dass** die Verstärkungsvorrichtung (15) durch eine Verbindung (23a) mit einem elektronischen System (26) verbunden ist, das die Steuerung der Zirkulation eines Wärmeträgers ermöglicht, der aus einem Kessel in einer Rohrschlange (29) stammt, die sich im Inneren eines hydro-solaren Durchlauferhitzers (30) befindet.

11. Durchlauferhitzer nach Anspruch 6, **dadurch gekennzeichnet, dass** die Verstärkungsvorrichtung (15) durch eine Verbindung (23a) mit einem elektronischen System (26) verbunden ist, das die Steuerung der Zirkulation eines Wärmeträgers ermöglicht, der von Sonnenkollektoren in einer Rohrschlange (28), die sich im Inneren eines elektro- oder hydro-solaren Durchlauferhitzers (30) befindet, stammt.

## Claims

1. Water heater including a detection device (1, 21) for measuring the amount of water remaining inside a tank (2) of the water heater (3, 30), **characterized in that** it comprises a capillary tube (10) containing a heat transfer fluid, which is placed outside the tank (2) of the water heater (3, 30), held under the layer of the thermal insulation (5) and stuck against and over the whole height of the vertical outer surface (14) of said tank, said capillary tube (10) being connected to an indicator device (12) comprising an amplification device (15) arranged outside said tank (2) and making it possible, under the effect of the expansion of the fluid contained in the capillary tube (10), to transmit either a movement to a component (16) or a variation in resistance to an electronic system (24, 26), so as to continuously indicate the amount of available hot water remaining in the tank (2) of the water heater (3, 30).

2. Water heater according to Claim 1, **characterized in that** the capillary tube (10) of the detection device (1, 21) is provided so as to substantially equal the height of the tank (2) of the water heater (3, 30).

3. Water heater according to Claim 1, **characterized in that** the indicator device (12) of the detection device (1) comprises an amplification device (15) making it possible to transmit a movement to a component (16) moving along a graduated scale (17) indicating the amount of available hot water remaining in the tank (2).

4. Water heater according to Claim 3, **characterized in that** the amplification device (15) consists of a Bourdon tube (18) making it possible to transmit the movement to the component (16) formed by a needle (19) rigidly connected to a shaft (20) so as to move along the graduated scale (17).

5. Water heater according to Claim 4, **characterized in that** the shaft (20) is connected with the free end (18a) of the Bourdon tube (18) by means of a notch (20a), making it possible, in the case of deformation of said tube under the effect of the expansion of the fluid contained in the capillary tube (10), to rotate the needle (19).

6. Water heater according to Claim 1, **characterized in that** the indicator device (12) of the detection device (21) comprises an amplification device (15) which consists of a membrane (22) connected in a hermetically sealed manner to the capillary tube (10) and of an electronic sensor (23) connected by a connection (23a) to an electronic system (24, 26).

7. Water heater according to Claims 6, **characterized in that** the electronic sensor (23) is held on the surface of the membrane (22) the deformation of which is proportional to the expansion of the heat transfer fluid contained inside the capillary tube (10), so as to transcribe into a variation in resistance that can be utilized by an electronic measurement card (24).

8. Water heater according to Claim 7, **characterized in that** the electronic measurement card (24) is provided inside a housing (24a) making it possible to display, in numerical form (24b) or in visual form such as a luminous bar graph (25), the amount of available hot water remaining in the tank (2).

9. Water heater according to Claim 6, **characterized in that** the amplification device (15) is connected by a connection (23a) to an electronic system (26) making it possible to control at least one boost resistor (27) of an electro- or hydro-solar water heater (30).

10. Water heater according to Claim 6, **characterized in that** the amplification device (15) is connected by a connection (23a) to an electronic system (26) making it possible to control the circulation of a heat transfer fluid coming from a boiler in a coil (29) located inside a hydro-solar water heater (30).

11. Water heater according to Claim 6, **characterized in that** the amplification device (15) is connected by a connection (23a) to an electronic system (26) making it possible to control the circulation of a heat transfer fluid coming from solar collectors in a coil (28) located inside an electro- or hydro-solar water heater (30).
